# EUROPEAN PATENT APPLICATION

(11) **EP 2 528 352 A2**
(43) Date of publication of application: **28.11.2012**
(21) Application number: 12168359.3
(22) Date of filing: 16.05.2012
(51) Int. Cl.: H04Q 9/00

(54) **Head-end system for advanced metering infrastructure network**

(30) Priority: 23.05.2011 US 201113113674
(71) Applicant: General Electric Company, Schenectady, NY 12345 (US)
(72) Inventor: Sfaelos, Jimmy, Atlanta, GA Georgia 30339-8402 (US)
(74) Representative: Picker, Madeline Margaret

(57) **Abstract**

A head-end system (34) for an advanced metering infrastructure (AMI) network (32) includes a processor (40). The processor (40) is configured for receiving event signals from AMI meters (30). The event signals are indicative of events occurring at customer locations. The processor (40) determines whether to transmit a command signal to a corresponding AMI meter in response to receiving an event signal from the corresponding AMI meter. The command signal is configured to instruct the corresponding AMI meter (30) to perform at least one task in response to the at least one event. The processor (40) transmits the command signal to the corresponding AMI meter in response to determining to transmit the command signal.

## Description

### BACKGROUND OF THE INVENTION

The present invention relates generally to an advanced metering infrastructure (AMI) network, and more particularly, to a head-end system of an AMI network that includes a processor used to determine whether to transmit a command signal to an AMI meter.

In order to prevent electricity demand from exceeding power generation and distribution capabilities during peak energy usage periods, power utility companies may employ active and/or passive load control techniques to influence electricity demand. For example, to implement active control of the loads consuming electricity, some power utilities utilize what is referred to as a "smart grid" or Advanced Metering Infrastructure (AMI) power network. Using an AMI network, a power utility may communicate with individual loads within a customer's premises and selectively reduce power consumption during peak usage periods. As such, during peak energy usage periods of time, a power utility may reduce power to low priority loads, while maintaining power to high priority loads.

In addition to controlling or adjusting the power supplied to customers, the smart grid may be capable of communicating events, such as errors, alarms, and other events, from AMI meters to the power utility company, and in turn, the power utility company may be capable of communicating commands to the AMI meters in response to such events. In one example, a plurality of AMI meters are connected to a head-end system (HES). The HES is a system application that operates on the utility network that enables two-way communication between the AMI meters and the HES. The HES, in turn, is coupled to external management systems of the power utility company to enable two-way communication between the HES and the external management systems of the power utility company. Thus, the HES functions as an interface by relaying event data from the AMI meters to the appropriate external management system of the power utility company, and by relaying commands from the external management systems to the appropriate AMI meter.

Because the conventional HES merely functions as a relay interface that only reports event data to the external management systems and relays commands from the external management systems to the appropriate AMI meter, the HES does not transmit a command signal to the AMI meters until the HES receives instructions from the external management systems. There may be prolonged time lapses between the AMI meter detecting the event and the AMI receiving a command in response to the event. Such prolonged time lapses may be due, at least in part, to high network traffic or other problems associated with expeditiously transmitting signals between the external management systems and the HES.

### BRIEF DESCRIPTION OF THE INVENTION

In one aspect, a head-end system is provided for use with an advanced metering infrastructure (AMI) network including a plurality of AMI meters at a plurality of customer locations. The head-end system generally comprises a processor configured for receiving at least one event signal from each of the AMI meters, wherein the at least one event signal is indicative of at least one event occurring at a corresponding customer location; determining whether to transmit at least one command signal to a corresponding AMI meter in response to receiving the at least one event signal from the corresponding AMI meter, wherein the at least one command signal is configured to instruct the corresponding AMI meter to perform at least one task in response to the at least one event; and transmitting the at least one command signal to the corresponding AMI meter in response to determining to transmit the at least one command signal.

In another aspect, a method of responding to an event occurring at a customer location using a processor of a head-end system of an advanced metering infrastructure generally comprises receiving at least one event signal from a AMI meter, wherein the at least one event signal is indicative of at least one event occurring at the customer location; determining whether to transmit at least one command signal to the AMI meter in response to receiving the at least one event signal from the AMI meter, wherein the at least one command signal is configured to instruct the AMI meter to perform at least one task in response to the at least one event; and transmitting the at least one command signal to the AMI meter in response to determining to transmit the at least one command signal.

In yet another aspect, an event communication and response system generally comprises a plurality of advanced metering infrastructure (AMI) meters; a head-end system communicatively coupled to the plurality of AMI meters, the head-end system comprising a processor; and a plurality of management systems for managing data from the AMI meters. The plurality of management systems are communicatively coupled to the head-end system. The processor of the head-end system is configured for: receiving at least one event signal from each of the AMI meters, wherein the at least one event signal is indicative of at least one event occurring at the corresponding AMI meter; determining whether to transmit at least one command signal to a corresponding AMI meter in response to receiving the at least one event signal from the corresponding AMI meter, wherein the at least one command signal is configured to instruct the corresponding AMI meter to perform at least one task in response to the at least one event; and transmitting the at least one command signal to the corresponding AMI meter in response to determining to transmit the at least one command signal.

### BRIEF DESCRIPTION OF THE DRAWINGS

Figure 1 is a block diagram of an example energy delivery system.
Figure 2 is a block diagram of an event communication and response network that may be used with the energy delivery system shown in Figure 1.
Figure 3 is a flowchart of an example method that may be implemented by a processor of a head-end system used with the event and communication network shown in Figure 2.

### DETAILED DESCRIPTION OF EMBODIMENTS OF THE INVENTION

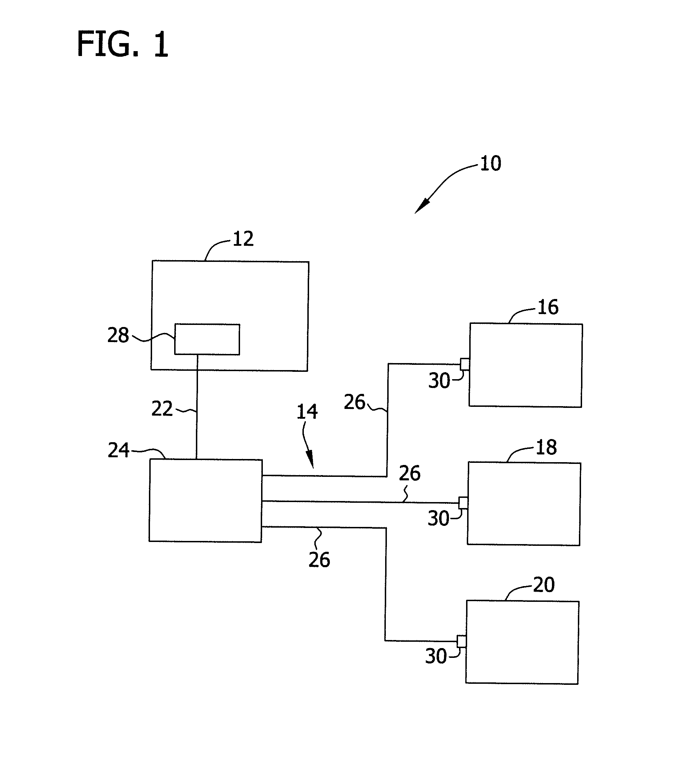

Figure 1 is a block diagram of an example energy delivery system 10 that includes an electric utility 12, an electrical grid 14, and a plurality of customer locations, such as, for example, a first customer location 16, a second customer location 18, and a third customer location 20. Customer locations 16, 18, and 20 may include, but are not limited to, a residence, an office building, an industrial facility, and/or any other building or location that receives electricity from utility 12. In the example embodiment, electricity is delivered from electric utility 12 to customer locations 16, 18, and 20 via electrical grid 14. In the example embodiment, electrical grid 14 includes at least one transmission line 22, an electrical substation 24, and a plurality of distribution lines 26. Electric utility 12 includes an electric power generation system 28 that supplies electrical power to electrical grid 14. Electric power generation system 28 may include a generator driven by, for example, a gas turbine engine, a hydroelectric turbine, and/or a wind turbine. Alternatively, electric power generation system 28 may utilize solar panels and/or any other electricity generating device that allows system 10 to function as described herein. Although the example energy production and delivery system 10 is an electrical system, in other embodiments the energy production and delivery system may be a gas system, such as a natural gas system including a plurality of pipelines and smart gas meters, or another type of energy system.

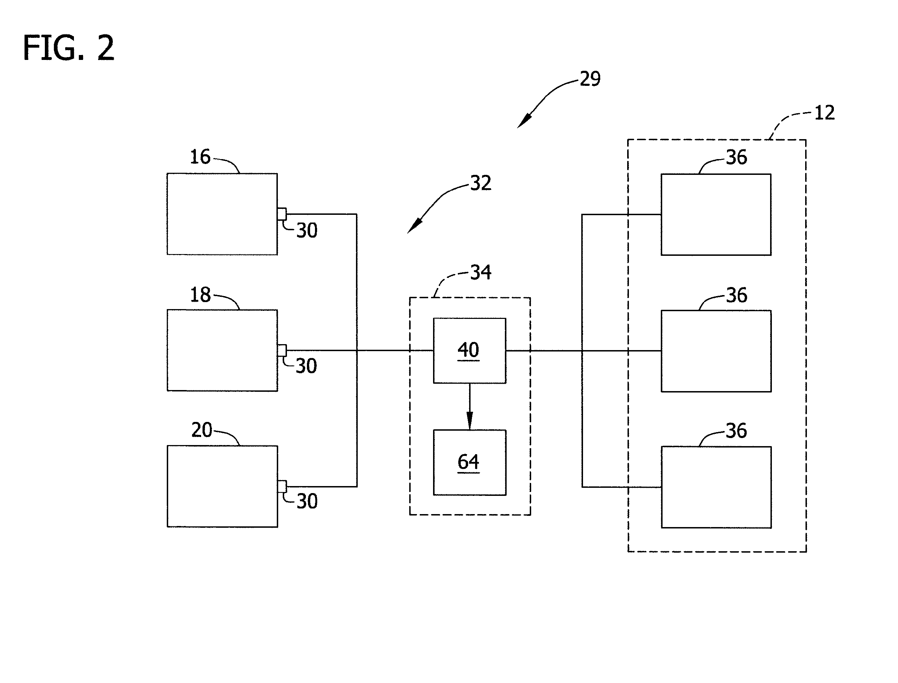

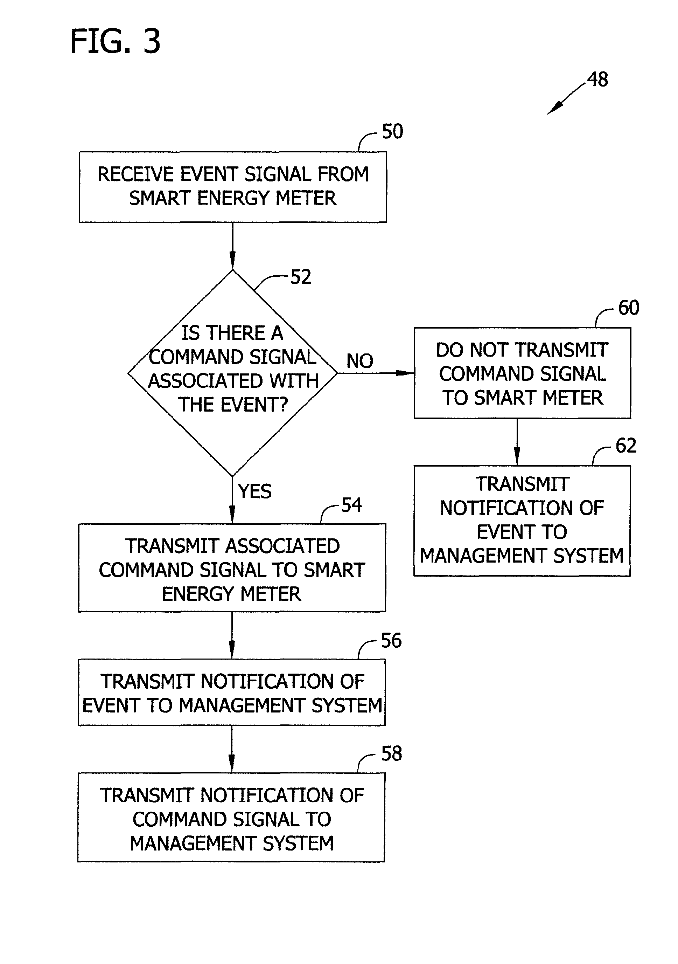

Figure 2 is a block diagram of an example event communication and response system 29 that may be used with energy delivery system 10 (shown in Figure 1). Figure 3 is a flowchart of an example method that may be implemented by a processor of a head-end system used with the event and communication network shown in Figure 2. As illustrated in Figure 2, each customer location 16, 18, and 20 includes an advanced metering infrastructure (AMI) meter 30. In addition to functioning as a meter that records energy usage, AMI meters 30 are part an advanced metering infrastructure (AMI) network 32, which is illustrated schematically in Figure 2. In the example embodiment, AMI network 32 is an example of a bi-directional communication system that enables electric utility 12 (or any other energy company) to communicate with AMI meter 30, and vice versa, as explained in more detail below. AMI meters 30 are communicatively coupled to at least one head-end system (HES) 34 of AMI network 32, and HES 34 is communicatively coupled to one or more external management systems 36 of electric utility 12. Examples of management systems 36 include, but are not limited to: Meter Data Management System, Meter Asset Management System, Distribution Operations System, Customer Information System, Billing System, and Outage Management System. AMI meters 30 may be communicatively coupled to HES 34 in any suitable manner that enables operation of AMI network 32 as described herein. HES 34 may be communicatively coupled to one or more management systems 36 in any suitable manner that enables operation of AMI network 32 as described herein. It should be understood that AMI network 32 may include more than one HES 34 communicatively coupled to a different set of AMI meters 30.

Each AMI meter 30 is capable of transmitting one or more event signals to HES 34. An event signal is indicative of an event occurring at a customer location 16, 18, and 20, or a group of customer locations 16, 18, and 20, associated with a corresponding AMI meter 30, or a group of AMI meters 30. In non-limiting examples, an event signal may be indicative of one or more of the following: a meter cover tampering; a power disconnect switch activated; a circuit breaker tripped; and/or a sag detected. AMI meters 30 may be capable of detecting an event occurring at customer locations 16, 18, and 20, or AMI meters 30 may be capable of receiving signals from other devices that detect the event. Each AMI meter 30 may be capable of transmitting one or more event signals indicative of one or more of the above-listed events or of other events not listed. AMI meters 30 may transmit one or more event signals to HES 34 in any suitable way.

HES 34 includes a processor 40 that receives event signals from AMI meters 30. The term processor, as used herein, refers to central processing units, microprocessors, microcontrollers, reduced instruction set circuits (RISC), application specific integrated circuits (ASIC), logic circuits, and any other circuit or processor capable of executing the functions described herein. As seen in Figure 3, processor 40 determines whether to transmit one or more command signals back to a corresponding AMI meter 30 based on the received event signal. A command signal instructs a corresponding AMI meter 30 to perform a specific task according to the event occurring at the customer location. In one embodiment, only some event signals have an associated command signal, although each event signal receivable by HES may have an associated command signal. In addition to transmitting a command signal, processor 40 may be programmed to transmit one or more event-notification signals to selected one or more external utility systems and/or transmit one or more command-notification signals to one or more external utility systems. Each event-notification signal is indicative of the event signal received by HES 34 from one or more of the AMI meters 30, and each command-notification signal is indicative of the command signal transmitted by HES 34 to one or more of the AMI meters 30.

A flowchart, generally indicated at 48, includes an example method that may be performed by processor 40 of HES 34. In the example method, processor 40 receives 50 an event signal from one of AMI meters 30. Upon receiving 50 the event .signal, processor 40 determines 52, whether there is a command signal associated with the received event signal. If the received event signal has an associated command signal, then processor 40, transmits 54 a selected command signal, based on the received event signal, to AMI meter 30. Processor 40 also transmits 56 and 58, respectively, an event-notification signal and a command-notification signal to at least one selected management system 36. The event-notification signal indicates that the head-end system received an event signal from a corresponding AMI meter 30, and the command-notification signal indicates that the head-end system transmitted a command signal to corresponding AMI meter 30. If the received event signal does not have an associated command signal, then processor 40, determines 60 that a command signal 62 to AMI meter 30 should not be transmitted. Processor 40 may relay 62 a notification of the event to a selected management system 36.

One example of an HES 34 is shown schematically in Figure 2. In this embodiment, HES 34 includes a memory device 64 that is communicatively coupled to processor 40. Memory device 64 may form part of processor 40 or may be external to processor 40. Memory device 64 stores a computer-readable database associating one or more selected events with one or more signal-instructions for processor 40. Upon receiving 50 an event signal, processor 40 is programmed to query 52 database for the event indicated by the received event signal. If processor 40 locates the event in the database, then the processor performs 54, 56, and 58 the signal-instructions associated with the event, such as disclosed in Figure 3. A suitable database may be a lookup table, which can be written in any suitable computer language, such as XML. An example table is provided below as Table 1.

**Table 1**

| **Meter ID** | **Events/Alarms** | **Command Response Back to Meter** | **External System(s) Notification of Events/Alarms** | **External System(s) Notification of Command Response** |
|---|---|---|---|---|
| **Meter 1** | Disconnect | Deactivate | Meter Asset | Meter Asset |
| | Switch | Disconnect | Management | Management |
| | Activated | Switch | System | System |
| | Circuit Breaker | Activate | Outage | Outage |
| | Tripped | Disconnect | Management | Management |
| | | Switch | System | System |
| | Sag Detected | Activate | Outage | Outage |
| | | Disconnect | Management | Management |
| | | Switch | System | System |
| | Meter Cover | Activate | Meter Asset | Meter Asset |
| | Tamper | Disconnect | Management | Management |
| | Detection | Switch | System | System |
| **Meter Group 1** | Disconnect | Deactivate | Meter Asset | Meter Asset |
| | Switch | Disconnect | Management | Management |
| | Activated | Switch | System | System |
| | Meter Cover | Activate | Meter Asset | Meter Asset |
| | Tamper | Disconnect | Management | Management |
| | Detection | Switch | System | System |

In the above example, the first column identifies AMI meter 30 and/or group of AMI meters 30 associated with HES 34. Thus, upon receiving 50 an event signal, processor 40 queries 52 the database for AMI meter 30 and/or group of AMI meters 30 from which the event signal was received. Next, processor 40 queries 52 the table to determine whether the event indicated by the received event signal is listed in the table under corresponding AMI meter 30 and/or group of AMI meters 30. If the event is listed, then processor 40 performs 54, 56, 58 the signal-instructions listed in the row associated with the event. For example, in the above table, the signal-instructions include a command-signal, an event-notification signal, and a command-notification signal. In particular, as listed in the second row in the above table, if processor 40 receives an event signal from Meter 1 that is indicative of a disconnect switch being activated, then processor 40 is instructed to: transmit a command-signal to AMI meter 30 instructing AMI meter 30 to deactivate the disconnect switch; transmit an event-notification signal to the Meter Asset Management System of electric utility 12 indicating that HES 34 received an event signal indicating that a disconnect switch has been activated; and transmit a command-notification signal to the Meter Asset Management System of electric utility 12 indicating that HES 34 transmitted a command signal to AMI meter 30 instructing AMI meter to deactivate disconnect switch.

If the event is not listed in the table, however, processor may be configured to relay 62 the event to one or more management systems 36. For example, processor 40 may query another database or table that includes relay-instructions based on the event signal received by processor 40.

In one embodiment, the table may be provided to the electric utility 12 as a template or shell, whereby the electric utility can decide which event signals received by HES 34 warrant an automated signal-command response from HES 34. Electric utility 12 can also decide where and when notifications signal are transmitted by HES 34.

The methods, systems, and apparatus described herein facilitate the efficient and economical implementation of an HES that is capable of determining whether to transmit at least one command signal to a corresponding AMI meter in response to receiving at least one event signal from the corresponding AMI meter and transmitting the at least one command signal to the corresponding AMI meter in response to determining to transmit the at least one command signal. In this way, command signals may be transmitted more quickly and efficiently in response to certain, selected events at the AMI meter, without the need to wait for the external management systems to transmit the signals. Example embodiments of methods, systems, and apparatus are described and/or illustrated herein in detail. The methods, systems, and apparatus are not limited to the specific embodiments described herein, but rather, components of each system, as well as steps of each method, may be utilized independently and separately from other components and steps described herein. Each component, and each method step, can also be used in combination with other components and/or method steps.

When introducing elements/components/etc. of the methods, systems, and apparatus described and/or illustrated herein, the articles "a", "an", "the", and "said" are intended to mean that there are one or more of the element(s)/component(s)/etc. The terms "comprising", "including", and "having" are intended to be inclusive and mean that there may be additional element(s)/component(s)/etc. other than the listed element(s)/component(s)/etc.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A head-end system (34) for use with an advanced metering infrastructure (AMI) network (32) that includes a plurality of AMI meters (30) at a plurality of customer locations (16, 18, 20), the head-end system comprising a processor (40) configured for:
receiving (50), at the head-end system, at least one event signal from each of the AMI meters, wherein the at least one event signal is indicative of at least one event occurring at a corresponding customer location;
determining (52), at the head-end system, whether to transmit at least one command signal to a corresponding AMI meter in response to receiving the at least one event signal from the corresponding AMI meter, wherein the at least one command signal is configured to instruct the corresponding AMI meter to perform at least one task in response to the at least one event; and
transmitting (54), at the head-end system, the at least one command signal to the corresponding AMI meter in response to determining to transmit the at least one command signal.

2. A head-end system (34) in accordance with Claim 1, further comprising a memory device (64) accessible by said processor (40), said memory device storing a database associating the at least one event with the at least one command signal, wherein to determine whether to transmit at least one command signal, said processor queries the database for the at least one event.

3. A head-end system (34) in accordance with Claim 1 or Claim 2, wherein said processor (40) is further configured for transmitting (56) at least one event-notification signal to at least one external management systems in response to receiving the at least one event signal, wherein the at least one event-notification signal is indicative of the at least one event occurring at the corresponding AMI meter.

4. A head-end system (34) in accordance with Claim 3, further comprising a memory device accessible by said processor (40), said memory device storing a database associating the at least one event with the at least one command signal and the event-notification signal, wherein to determine whether to transmit at least one command signal, said processor (40) queries the database for the at least one event.

5. A head-end system (34) in accordance with Claim 3 or Claim 4, wherein said processor (40) is further configured for transmitting at least one command-notification signal to at least one of the external management systems in response to transmitting the at least one command signal, wherein the at least one command-notification signal is indicative of the at least one command-signal being transmitted to the corresponding AMI meter.

6. A head-end system (34) in accordance with Claim 5, further comprising a memory device accessible by said processor (40), said memory device storing a database associating the at least one event with the at least one command signal and the event-notification signal, said database further associating the transmitting of the at least one command signal with the at least one command-notification, wherein to determine whether to transmit at least one command signal, said processor (40) queries the database for the at least one event

7. An event communication and response system comprising:
a plurality of advanced metering infrastructure (AMI) meters (30);
a head-end system (34) in accordance with any one of Claims 1 to 6, communicatively coupled to the plurality of AMI meters, the head-end system comprising a processor (40); and
a plurality of management systems (36) for managing data from the AMI meters, the plurality of management systems being communicatively coupled to the head-end system.

8. A method of responding to an event occurring at a customer location (16, 18, 20) using a processor (40) of a head-end system (34) of an advanced metering infrastructure (32), the method comprising:
receiving (50) at least one event signal from a AMI meter (30), wherein the at least one event signal is indicative of at least one event occurring at the customer location;
determining (52) whether to transmit at least one command signal to the AMI meter in response to receiving the at least one event signal from the AMI meter, wherein the at least one command signal is configured to instruct the AMI meter to perform at least one task in response to the at least one event; and
transmitting (52) the at least one command signal to the AMI meter in response to determining to transmit the at least one command signal.

9. A method in accordance with Claim 8, wherein said determining comprises querying a database stored in a memory device (64) for the at least one event.

10. A method in accordance with Claim 8 or Claim 9, further comprising transmitting (56) at least one event-notification signal to at least one management system (36) of an energy company in response to receiving the at least one event signal, wherein the at least one event-notification signal is indicative of the at least one event occurring at the customer location.

11. A method in accordance with Claim 10, wherein said determining comprises querying a database stored in a memory device for the at least one event.

12. A method in accordance with any one of Claims 8 to 11, further comprising transmitting at least one command-notification signal to at least one of management system of an energy company in response to transmitting the at least one command signal, wherein the at least one command-notification signal is indicative of the at least one command-signal being transmitted to the AMI meter.

13. A method in accordance with Claim 12, wherein said determining comprises querying a database stored in a memory device for the at least one event.
